# EUROPÄISCHE PATENTSCHRIFT

(11) **EP 2 339 376 B1**
(45) Veröffentlichungstag und Bekanntmachung des Hinweises auf die Patenterteilung: **08.02.2012**
(21) Anmeldenummer: 09179696.1
(22) Anmeldetag: 17.12.2009
(51) Int. Cl.: G01S 17/93

(54) **Optoelektronischer Sensor**
Optoelectronic sensor
Capteur optoélectronique

(43) Veröffentlichungstag der Anmeldung: 29.06.2011
(73) Patentinhaber: SICK AG, 79183 Waldkirch (DE)
(72) Erfinder: Erb, Frank, 79211 Denzlingen (DE); Feser, Matthias, 79183 Waldkirch (DE)
(74) Vertreter: Hehl, Ulrich

(56) Entgegenhaltungen:
- EP-A1- 1 470 967
- WO-A1-2005/023613
- WO-A1-2006/015894
- GB-A- 2 413 449

## Beschreibung

Die Erfindung betrifft einen optoelektronischen Sensor für ein Fahrzeug, das sich auf einer zu beiden Seiten begrenzten Fahrbahn bewegt, sowie ein Verfahren zur Überwachung der Umgebung eines Fahrzeugs nach dem Oberbegriff von Anspruch 1 beziehungsweise 9.

Optoelektronische Sensoren werden seit längerem als Fahrer-Assistenzsysteme oder zur automatischen Navigation von Fahrzeugen eingesetzt. Da eine wichtige Funktion darin besteht, Hindernisse zu erkennen, sind derartige Sensoren meist zur Abstandsbestimmung ausgelegt. Hierzu sind verschiedene Verfahren bekannt, beispielsweise stereoskopische Kamerasysteme.

Ein weiterer abstandsmessender Sensortyp ist ein Laserscanner, der kurze Lichtpulse aussendet und die Lichtlaufzeit bis zum Empfang von Reflexionen der Objekte im Sichtfeld misst. Der Scanstrahl wird über einen Winkelbereich periodisch abgelenkt, so dass in dem Überwachungsbereich durch Abstand und Winkel erkannter Objekte die Objektverteilung in der Scanebene gewonnen wird.

In der Sicherheitstechnik besteht die Anwendung darin, unzulässige Eingriffe in Schutzfelder zu erkennen und daraufhin ein sicherheitsgerichtetes Abschaltsignal zu erzeugen. Wenn also vor dem Fahrzeug innerhalb des Schutzfeldes eine Person auftaucht, so wird das Fahrzeug abgebremst, um einen Unfall zu vermeiden.

Eine besondere Anwendung, in denen Fahrzeuge abgesichert werden, bilden Lager und Logistikzentren. Die Gänge zwischen den Lagerregalen werden dabei so schmal wie möglich bemessen, um Lagerplatz zu sparen. Je nach Lagertyp werden die Gänge von vollautomatischen Lagersystemen oder von speziellen Schmalgang-Staplern befahren. Diese Fahrzeuge sind oft fahrerlos und befahren die Gänge automatisiert oder zwangsgeführt beispielsweise längs induktiver Führungsschienen. Sofern in den Gängen der Aufenthalt von Personen zugelassen ist, müssen die Fahrzeuge mit Sicherungssystemen ausgerüstet sein, um Unfälle zu vermeiden.

Dazu überwacht je ein Laserscanner ein Schutzfeld in Fahrt- und Rückwärtsrichtung des Fahrzeugs. Herkömmlich werden dabei statische Schutzfelder eingesetzt, die also stets die gleiche Geometrie aufweisen. Durch Ungenauigkeiten wie Bodenunebenheiten, Unregelmäßigkeiten der Führungsschienen, Schlingerbewegungen des Fahrzeugs oder Positionierungsungenauigkeiten des Staplers im Schmalgang stoßen die Schutzfelder mit einer Länge von sieben Metern oder in der Größenordnung von bis zu zehn Metern gelegentlich an den Regalfüßen oder dem Regalinhalt an. Die Laserscanner erkennen das als Schutzfeldeingriff und bringen das Fahrzeug automatisch zu einem Nothalt.

Eine bekannte Gegenmaßnahme ist, die Schutzfelder anzuspitzen, also ab einer gewissen Entfernung vom Fahrzeug trapezförmig zu verjüngen, um etwas Toleranz in der Breite zu gewinnen, oder mit möglichst schmalen Schutzfeldern zu arbeiten. Dies geht aber auf Kosten der Sicherheitsreserven und ist selbst durch mühsame händische Optimierung nur bis zu einer gewissen Grenze möglich. Ein zu schmales, wegen der genannten Ungenauigkeiten schräg gestelltes Schutzfeld könnte nämlich eine seitlich stehende Person wegen zu geringer Abdeckung des Gangs versehentlich übersehen. Somit kommt es bei den herkömmlichen Lösungen regelmäßig zu unnötigen und unerwünschten Sicherheitsabschaltungen, wenn das Schutzfeld an eine äußere Begrenzung stößt.

Aus der DE 103 07 232 A1 ist ein Lagersystem und Lagerverfahren bekannt, in dem das fahrerlose Transportsystem nicht zwangsgeführt ist. Stattdessen wird ein lasergesteuertes Positionierungssystem eingesetzt, welches räumlich verteilte, stationäre Bezugsmarken aufweist, die per Laser abgetastet werden, um die Position des fahrerlosen Transportsystems zu bestimmen und dessen Fahrtrichtung zu regeln. Ein Sicherungssystem zur Unfallvermeidung ist aber nicht angesprochen.

Die DE 20 2005 004 466 U1 beschreibt eine Vorrichtung zur Erfassung von Objekten mit optoelektronischen Sensoren an einem führerlosen Transportsystem. Von den Sensoren aufgespannte Schutzfelder ändern sich dynamisch, um sich an die Geschwindigkeit und die Fahrtrichtung anzupassen. Die dynamische Anpassung erfolgt so allein aufgrund von Steuerungsdaten des Fahrzeugs. Eine Anpassung von Schutzfeldern an äußere Gegebenheiten wird nicht diskutiert.

Aus der WO 2006/015894 A1, die Basis für die zweiteilige Form der unabhängigen Ansprüche ist, ist ein Sensorsystem mit mehreren Sensoren und einer Verarbeitungseinheit bekannt, welche mit den Sensoren in Kommunikationsverbindung steht. Auf diese Weise kann die Verarbeitungseinheit den Sensoren einen Erfassungsbereich oder einen Modus vorgeben.

Es ist daher Aufgabe der Erfindung, einen optoelektronischen Sensor zur Absicherung eines Fahrzeugs anzugeben, der besser mit Ungenauigkeiten der Position gegenüber Fahrbahnbegrenzungen umgehen kann.

Diese Aufgabe wird durch einen optoelektronischen Sensor gemäß Anspruch 1 und ein Verfahren zur Überwachung der Umgebung eines Fahrzeugs gemäß Anspruch 9 gelöst. Die Lösung geht von dem Grundgedanken aus, Schutzfelder dynamisch an die äußeren Begrenzungen der Fahrbahn anzupassen. Statt also statisch immer einen Bereich direkt vor dem Fahrzeug zu überwachen, wird versucht, das Schutzfeld dynamisch in die Fahrbahn einzupassen. Ungenauigkeiten in der Fahrt des Fahrzeugs werden damit robust kompensiert.

Die Erfindung hat den Vorteil, dass Fehlabschaltungen aufgrund der Fahrbahnbegrenzungen deutlich reduziert oder ganz verhindert werden. Durch die intelligente Schutzfeldanpassung an die Bewegung und Lage des Fahrzeugs gegenüber der Fahrbahn wird die Verfügbarkeit erhöht. Statt den herkömmlich auf Kosten der Sicherheitsreserven verjüngten oder verschmälerten Schutzfeldern werden breitere Schutzfelder verwendet, wodurch sich die Detektionsfähigkeit von Personen und damit die Sicherheit erhöht. Die Konfiguration ist erheblich vereinfacht, weil eine händische Anpassung von Schutzfeldern entfällt.

Eine dynamische Anpassung bedeutet, dass mit jeder neuen Fahrzeugposition oder zyklisch in kurzen, von den Sicherheitsanforderungen vorgegebenen Zeitintervallen die Schutzfelder verändert werden. Während kürzerer Zeitintervalle, innerhalb derer weder eine Person kritisch nahe an das Fahrzeug herankommen kann noch ein Anstoßen des Schutzfelds an die Begrenzung zu erwarten ist, muss keine dynamische Anpassung erfolgen.

Das Schutzfeld weist bevorzugt eine von der Geschwindigkeit des Fahrzeugs abhängige Längsausdehnung annähernd in Fahrrichtung und eine vorgegebene, an Fahrzeug und/oder Fahrbahn angepasste Querausdehnung auf. Je nach Geschwindigkeit ist nur ein Teil der maximalen Längsausdehnung erforderlich, solange der Bremsvorgang nach der spätesten denkbaren Detektion einer Person noch sicher abgeschlossen ist. Entsprechende Schutzfeldlängen können in einer Tabelle abgelegt sein oder aus der Geschwindigkeit nach einer Rechenvorschrift ermittelt werden. Damit erhöht sich die Verfügbarkeit weiter. Eine möglichst große und vorgegebene Breite des Schutzfeldes, die aufgrund der erfindungsgemäßen Einpassung nicht zu Fehlabschaltungen durch die Begrenzung führt, erhöht die Sicherheit. Ist das Schutzfeld rechteckig, so bleibt diese Sicherheitsreserve über die gesamte Länge erhalten.

Die Auswertungseinheit ist bevorzugt dafür ausgebildet, bei der dynamischen Einpassung die beiden Parameter Drehwinkel und Versatz des Schutzfeldes gegenüber einer Mittelachse des Fahrzeugs zu variieren. So wird die Lage des Schutzfeldes in nur zwei Parametern erfasst und lässt sich mit wenig Aufwand optimieren. Beispielsweise ist sogar ein brute-force-Ansatz denkbar, bei dem sämtliche Kombinationen von Drehwinkeln und Versatz in einer gewissen diskreten Genauigkeit durchprobiert werden.

Die Auswertungseinheit ist bevorzugt dafür ausgebildet, zunächst bei Befahren eines Fahrbahnabschnitts einen Hauptdrehwinkel und einen Hauptversatz des Schutzfeldes festzulegen und während der Weiterfahrt auf dem Fahrbahnabschnitt einen differentiellen Nachstelldrehwinkel zu bestimmen. Sehr anschaulich gesprochen, lässt sich dies mit einer Rakete vergleichen, die zunächst auf ihr Ziel ausgerichtet wird und dann während des Flugs nachsteuert, um den gewünschten Kurs zu halten. Übertragen auf ein Lager wird zunächst bei Eintritt des Fahrzeugs in einen Schmalgang über den Hauptdrehwinkel und den Hauptversatz die wesentliche Anpassung für das Schutzfeld vorgenommen und dann während der Durchfahrt ausgehend von dieser anfänglichen Ausrichtung nur noch die differentielle Abweichung ermittelt. Dieses Verfahren muss nur einen sehr kleinen Parameterraum untersuchen, ist damit deutlich schneller als ein vollständiges Durchprobieren mit quadratischem Aufwand und deshalb für die in der Praxis meist benötigte Echtzeitauswertung wesentlich geeigneter. Optional kann auch noch ein Nachstellversatz berechnet werden.

Die Auswertungseinheit ist bevorzugt dafür ausgebildet, den Hauptdrehwinkel und/oder den Nachstelldrehwinkel als denjenigen Winkel zu bestimmen, unter dem die Summe aus den beiden Abständen einer Längsachse des Schutzfeldes gegenüber den Begrenzungen zu beiden Seiten der Fahrbahn maximiert ist. Dabei ist der Abstand wie üblich als das kürzeste Lot von der Längsachse auf einen Punkt der Begrenzung definiert. Dies entspricht der Vorgabe, dass kein Teil oder Punkt der Begrenzung in dem potentiellen Schutzfeld liegen darf. Bei diesem Vorgehen wird, nochmals in anderen Worten ausgedrückt, jeweils eine Längsachse in Richtung eines zu testenden Drehwinkels gelegt. Dann wird der nächstliegende Punkt zu dieser Längsachse auf der linken und der nächste Punkt auf der rechten Begrenzung über die Längsausdehnung des potentiellen Schutzfeldes gesucht. Der gesuchte Drehwinkel ist derjenige Winkel, bei dem die Summe der Abstände dieser beiden Punkte zu der Längsachse am größten ist, um ein möglichst breites Schutzfeld unterzubringen. Der optimale Drehwinkel lässt sich beispielsweise durch iteratives Durchprobieren in diskreten Winkelschritten auffinden. Der Unterschied für das Auffinden des Hauptdrehwinkels gegenüber dem Nachstelldrehwinkel liegt nicht in der Optimierungsvorschrift, sondern in dem Testwinkelbereich, innerhalb dessen nach dem Maximum gesucht wird. Der Aufwand für dieses Vorgehen ist nur linear.

Die Auswertungseinheit ist bevorzugt dafür ausgebildet, den Hauptversatz und/oder einen Nachstellversatz so zu bestimmen, dass die zentrale Längsachse des Schutzfeldes von den Begrenzungen zu beiden Seiten der Fahrbahn den gleichen Abstand hat. Beim Auffinden des Drehwinkels werden für die Optimierung der Summe auch die einzelnen Abstände zu den Begrenzungen an beiden Seiten bestimmt. Damit genügt eine einfache Mittelung, um den notwendigen Versatz für die Zentrierung der Längsachse zu bestimmen. Der Versatz erfordert also nur noch eine einfache Rechnung mit geringster, konstanter Rechenzeit und ändert nichts an dem nur linearen Aufwand des gesamten Vorgehens. Hauptversatz und Nachstellversatz werden in gleicher Weise bestimmt, wobei natürlich jeweils der zugehörige Drehwinkel, also Hauptdrehwinkel oder Nachstellwinkel, zugrunde liegt.

Die Auswertungseinheit ist bevorzugt dafür ausgebildet, den Hauptdrehwinkel in einer Umgebung des durch die Fahrtrichtung gegebenen Winkels mit einer ersten Genauigkeit und den Nachstelldrehwinkel in einer Umgebung des Hauptdrehwinkels mit einer zweiten Genauigkeit zu suchen. Für den Hauptdrehwinkel liegt der Testwinkelbereich um den durch die Fahrtrichtung definierten Winkel 0 herum, während für den Nachstelldrehwinkel der Testwinkelbereich um den Hauptdrehwinkel herum gelegt wird. Da beim Nachstelldrehwinkel keine allzu großen Abweichungen mehr zu erwarten sind, kann dessen Testwinkelbereich auch enger gewählt werden. Dann arbeitet die Auswertung schneller, sofern erste und zweite Genauigkeit gleich sind, oder der Nachstelldrehwinkel wird mit einer höheren Auflösung von beispielsweise 1/10° gegenüber beispielsweise nur 2° für den Hauptdrehwinkel gesucht.

Die Auswertungseinheit ist bevorzugt dafür ausgebildet, ein Halt- oder Bremssignal auszugeben, wenn kein Schutzfeld der geforderten Abmessungen in die Begrenzungen einpassbar ist. Es wäre dann nur ein schmaleres oder kürzeres Schutzfeld möglich als von den Sicherheitsvorgaben gefordert. Das Scheitern des Einpassens muss durch ein Objekt oder eine unerwartete Verengung der Fahrbahn verursacht sein und wird deshalb als unzulässiger Schutzfeldeingriff angesehen. Wenn umgekehrt erfolgreich ein gemäß den Sicherheitsvorgaben dimensioniertes Schutzfeld eingepasst ist, bedeutet dies, dass der Weg frei ist. Neben dem Schutzfeld ist durch dessen Vorgaben kein Platz für eine Person, und deshalb besteht keine Gefahr. Die Einpassung des Schutzfeldes impliziert damit zugleich die sonst übliche Überwachung eines Schutzfeldes auf unzulässige Eingriffe, denn es ist gerade Einpassungsbedingung, dass das Schutzfeld keine Objekte enthält.

In vorteilhafter Weiterbildung ist vorgesehen, ein Fahrzeug mit einem erfindungsgemäßen Sensor auszurüsten, wobei das Fahrzeug ein fahrerloses oder zwangsgeführtes Transportsystem, insbesondere ein Hochregalstapler oder ein Gabelstapler, und die Fahrbahn ein gerader Gang in einem Lager, insbesondere einem Hochregallager ist. Der Begriff Fahrzeug ist sehr weit zu verstehen und umfasst jegliche mobile Maschine, also auch einen Roboter. Der Überwachungsbereich des Sensors ist das Fahrbahnstück in Sichtrichtung des Sensors. In der Regel passt in einen Schmalgang in einem Hochregallager nur das fahrerlose Transportsystem oder der Schmalgangstapler, eine Person kann nicht seitlich ausweichen. Deshalb ist eine Absicherung besonders wichtig. Zugleich ist wegen der sehr schmalen Gänge die Empfindlichkeit gegenüber Ungenauigkeiten der Lage des Schmalgangstaplers besonders hoch, so dass eine Einpassung von Schutzfeldern die Verfügbarkeit erheblich verbessert.

Besonders bevorzugt sind dabei Abstandshalteelemente zur Begrenzung der Fahrbahn vorgesehen, insbesondere nur am Anfang der Fahrbahn. So wird eine von dem jeweiligen Zustand der Fahrbahn, insbesondere dem Inhalt von die Fahrbahn begrenzenden Regalen unabhängige, deterministische Situation geschaffen. Wegen der Orientierung in Hauptrichtung in einer bevorzugten Ausführungsform der Erfindung genügt es, mit' deutlich reduziertem Aufwand die Abstandshalteelemente nur am Eingang eines Gangs anzubringen.

An dem Fahrzeug ist bevorzugt ein erster Sensor zur Warn-/Schutzfeldüberwachung in Fahrtrichtung und ein zweiter Sensor zur Warn-/Schutzfeldüberwachung gegen die Fahrtrichtung vorgesehen. Auch die rückwärtige Annäherung an ein bewegtes Fahrzeug ist eine Gefahrenquelle, besonders dann, wenn Rückwärtsfahrten möglich sind, was wegen der fehlenden Wendemöglichkeiten und der oft sehr langen Gänge häufig vorgesehen ist.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Draufsicht auf einen Gang in einem Regallager mit einem Fahrzeug, das einen erfindungsgemäßen Sensor zur dynamischen Einpassung von Schutzfeldern aufweist;
- Fig. 2a-c: Draufsichten auf die von dem erfindungsgemäßen Sensor bestimmten Be- grenzungen des Gangs zur Erläuterung des Auffindens von anfänglichem Hauptdrehwinkel und Hauptversatz beim Einfahren des Fahrzeugs in den Gang;
- Fig. 3a-c: Draufsichten ähnlich Figur 3 zur Erläuterung des Auffindens von differen- tiellem Nachsteuerdrehwinkel und differentiellem Nachsteuerversatz bei der weiteren Durchfahrt des Fahrzeugs durch den Gang;
- Fig. 4: eine schematische dreidimensionale Ansicht des Gangs zur Erläuterung von Abschattungen und Positionsmarken; und
- Fig. 5: eine schematische Schnittdarstellung eines erfindungsgemäßen Sensors, der als Laserscanner ausgebildet ist.

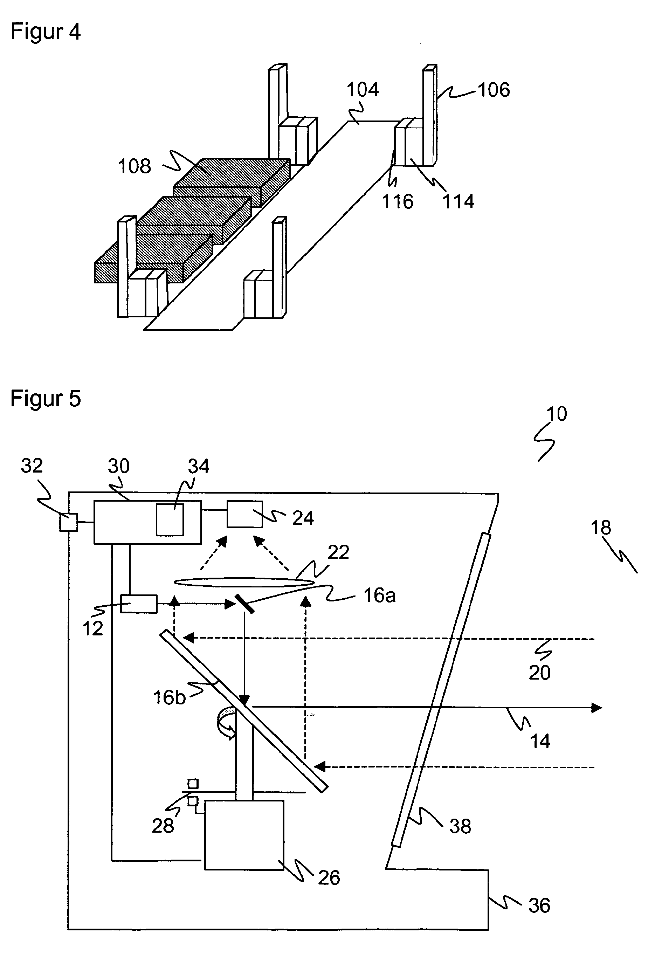

Anhand der Figur 5 wird zunächst die Funktionsweise eines entfernungsmessenden Laserscanners als eine Ausführungsform eines erfindungsgemäßen Sensors 10 beschrieben. Andere abstandsmessende Sensoren, wie Stereokameras oder auf Lichtlaufzeit basierende Kamerachips etwa nach dem Prinzip der Photonmischdetektion sind an sich bekannt und können anstelle des Laserscanners eingesetzt werden.

Ein von einem Lichtsender 12, beispielsweise einem Laser, erzeugter Lichtstrahl 14, der einzelne Lichtimpulse aufweist, wird über Lichtablenkeinheiten 16a-b in einen Überwachungsbereich 18 gelenkt und dort von einem gegebenenfalls vorhandenen Objekt remittiert. Das remittierte Licht 20 gelangt wieder zu dem Sicherheitsscanner 10 zurück und wird dort über die Ablenkeinheit 16b und mittels einer Empfangsoptik 22 von einem Lichtempfänger 24 detektiert, beispielsweise einer Photodiode.

Die Lichtablenkeinheit 16b ist in der Regel als Drehspiegel ausgestaltet, die durch Antrieb eines Motors 26 kontinuierlich rotiert. Die jeweilige Winkelstellung der Lichtablenkeinheit 16b wird über einen Encoder 28 erfasst. Der von dem Lichtsender 12 erzeugte Lichtstrahl 14 überstreicht somit den durch die Rotationsbewegung erzeugten Überwachungsbereich 18. Wird von dem Lichtempfänger 24 ein reflektiertes Lichtsignal 20 aus dem Überwachungsbereich 18 empfangen, so kann aus der Winkelstellung der Ablenkeinheit 16b mittels des Encoders 28 auf die Winkellage des Objektes in dem Überwachungsbereich 18 geschlossen werden.

Zusätzlich wird die Laufzeit der einzelnen Laserlichtpulse von ihrem Aussenden bis zu dem Empfang nach Reflexion an dem Objekt in dem Überwachungsbereich 18 ermittelt. Aus der Lichtlaufzeit wird unter Verwendung der Lichtgeschwindigkeit auf die Entfernung des Objektes von dem Sicherheitsscanner 10 geschlossen. Diese Auswertung erfolgt in einer Auswerteeinheit 30, die dafür mit dem Lichtsender 12, dem Lichtempfänger 24, dem Motor 26 und dem Encoder 28 verbunden ist. Somit stehen über den Winkel und die Entfernung zweidimensionale Polarkoordinaten aller Objekte in dem Überwachungsbereich 18 zur Verfügung.

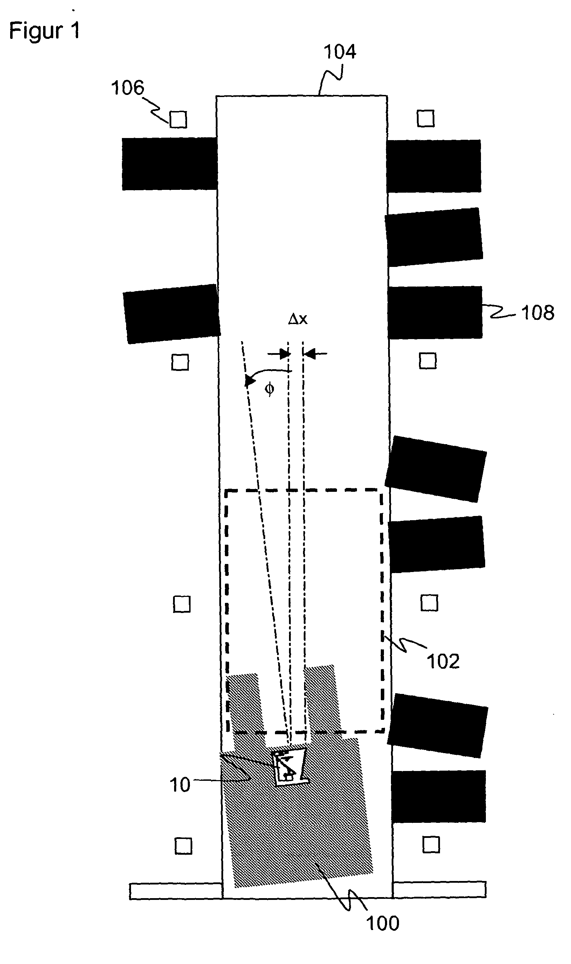

Das eigentliche Ziel der Auswertung ist, ein Sicherheitssignal an einem Sicherheitsausgang 32 (OSSD, Output Signal Switching Device) bereitzustellen, um erforderlichenfalls das Abbremsen oder einen Nothalt eines Fahrzeugs auszulösen. Über die Winkel- und Entfernungsdaten berechnet die Auswerteeinheit 30 hierzu den Ort eines Objektes in dem Überwachungsbereich 18. In einer Schutzfeld-Einpassungseinheit 34 wird geprüft, ob sich ein zweidimensionales Schutzfeld mit durch Sicherheitsanforderung definierten Mindestabmessungen in Lage und/oder Geometrie so dynamisch anpassen lässt, dass keine verletzenden Schutzfeldeingriffe vorliegen. Je nach Ergebnis schaltet die Auswertungseinheit 30 den Sicherheitsausgang 32. Die erfindungsgemäße dynamische Schutzfeldanpassung wird nachfolgend im Detail zu den Figuren 1 bis 4 beschrieben.

Die genannten Funktionskomponenten sind in einem Gehäuse 36 angeordnet, das frontseitig, also im Bereich des Lichtaus- und Lichteintritts, eine Frontscheibe 38 aufweist. Die Frontscheibe 38 ist zur Vermeidung von direkten Reflexionen in den Lichtempfänger 24 schräg gestellt, so dass Lichtstrahl 14 und Frontscheibe 38 einen Winkel ungleich neunzig Grad einschließen. Die Auswertungseinheit 30 mit der Schutzfeld-Einpassungseinheit 34 kann abweichend von der Darstellung auch ganz oder teilweise außerhalb des Sensors 10 implementiert sein. Weiter ist denkbar, die Daten mehrerer Sensoren 10 zusammenzuführen und gemeinsam auf sicherheitskritische Ereignisse auszuwerten.

Figur 1 zeigt eine vereinfachte Draufsicht auf einen Schmalgangstapler 100, der mittels eines Sensors 10 ein Schutzfeld 102 in Fahrtrichtung überwacht. Erkennt der Sensor 10 ein Objekt in seinem Schutzfeld 102, so wird ein Brems- oder Nothaltbefehl an den Schmalgangstapler 100 ausgegeben, um einen Unfall zu vermeiden. Optional ist am Rand des Schutzfeldes 102 ein zusätzliches vorgelagertes Warnfeld vorgesehen. Eingriffe in das Warnfeld führen nicht unmittelbar zu einem Nothalt, sondern zunächst zu einer Warnung, beispielsweise dem Aufleuchten einer Warnleuchte oder dem Ertönen einer Hupe. Damit soll einer Person die Gelegenheit gegeben werden, den eigentlichen Schutzfeldeingriff noch rechtzeitig zu vermeiden, so dass der Betrieb nicht unterbrochen werden muss. Die Warnung kann mit einer Vorsichtsmaßnahme verbunden werden, etwa einer Geschwindigkeitsreduktion oder dem Vermeiden einer Beschleunigung. Im Gegensatz zu einem Nothalt muss nach einer derartigen Vorsichtsmaßnahme der Schmalgangstapler 100 nicht eigens freigegeben werden, sondern kann von sich aus bei wieder freiem Schutz- und Warnfeld zum ungestörten Betrieb zurückkehren.

Der Schmalgangstapler 100 befährt den Schmalgang 104 eines Hochregallagers. Somit ist die Fahrbahn zu beiden Seiten eng begrenzt durch die Regale, die in der Figur 1 als Regalfüße 106 und diverse Paletten 108 dargestellt sind. Auch wenn die Erfindung an diesem Beispiel eines Schmalgangstaplers 100 und dem Schmalgang 104 als zu beiden Seiten begrenzte Fahrbahn beschrieben wird, umfasst sie gleichwohl andere Fahrzeuge, andere Fahrbahnen und andere Begrenzungen.

Das Schutzfeld 102 ist mit seiner Längsausdehnung in die Gangrichtung ausgerichtet und in dem Gang zentriert. Auf diese Weise passt es sich bei vorgegebener Geometrie optimal in den Gang ein. Es ist leicht erkennbar, dass ein in Fahrtrichtung vor dem Schmalgangstapler 100 zentriertes statisches Schutzfeld gleicher Abmessungen die Begrenzungen des Schmalgang 104 durchstoßen würde. In diesem Fall würde ein Nothalt des Schmalgangstaplers 100 ausgelöst, weil das Schutzfeld nicht frei ist, obwohl der Schmalgang 104 vor dem Schmalgangstapler 100 frei ist.

Aus diesem Grund ist erfindungsgemäß vorgesehen, das Schutzfeld 102 gezielt in die dargestellte abweichende Lage gegenüber dem Schmalgangstapler 100 zu bringen. Die Einpassung 102 ist grundsätzlich auf beliebige Weise denkbar. Die Optimierungsaufgabe wird vereinfacht, wenn die Lage des Schutzfeldes 102 durch nur zwei Parameter angegeben wird, nämlich einen Drehwinkel φ, um den die Längsachse des Schutzfeldes 102 gegenüber der Fahrtrichtung verkippt ist, und einen Versatz Δx der Mittelachse des Schmalgangstaplers 100 gegenüber der Mittelachse des Schutzfeldes 102. Der Wert von Δx ist anzupassen, wenn der Sensor 10 abweichend von der Darstellung der Figur 1 nicht auf dem Schmalgangstapler 100 zentriert angeordnet wird.

Mit dem Parameterpaar φ, Δx passt der Sensor 10 das Schutzfeld 102 nach einem sogleich zu beschreibenden Verfahren in den Schmalgang 104 ein. Finden sich Werte für φ, Δx, mit denen das Schutzfeld 102 bei durch Sicherheitsanforderungen vorgegebener Mindestausdehnung sowohl in Längsrichtung als auch in Querrichtung ohne unzulässigen Objekteingriff bleibt, so gibt der Sicherheitsausgang 32 die Weiterfahrt frei und löst andernfalls einen Nothalt aus. Die gewünschte Längsausdehnung hängt dabei vorzugsweise von dem erforderlichen Bremsweg und damit von der Fahrtgeschwindigkeit ab, um zur höheren Verfügbarkeit bei kleineren Geschwindigkeiten eine größere Annäherung von Personen zu tolerieren.

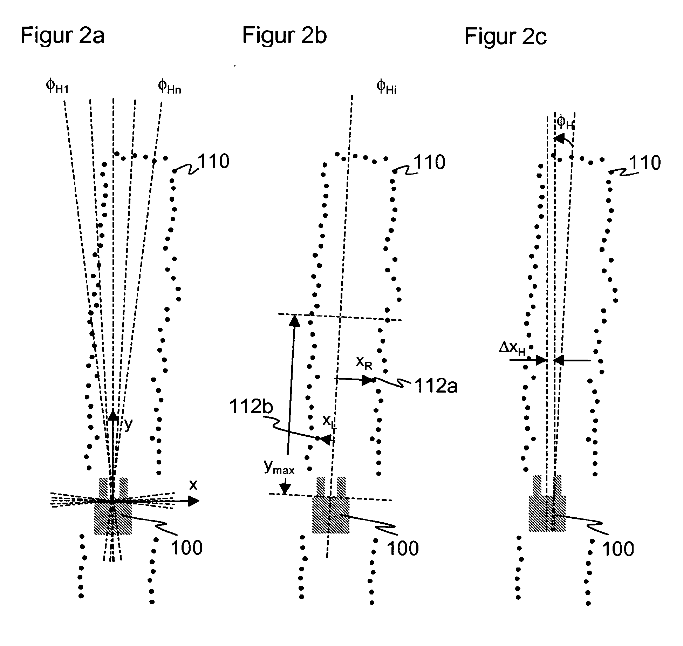

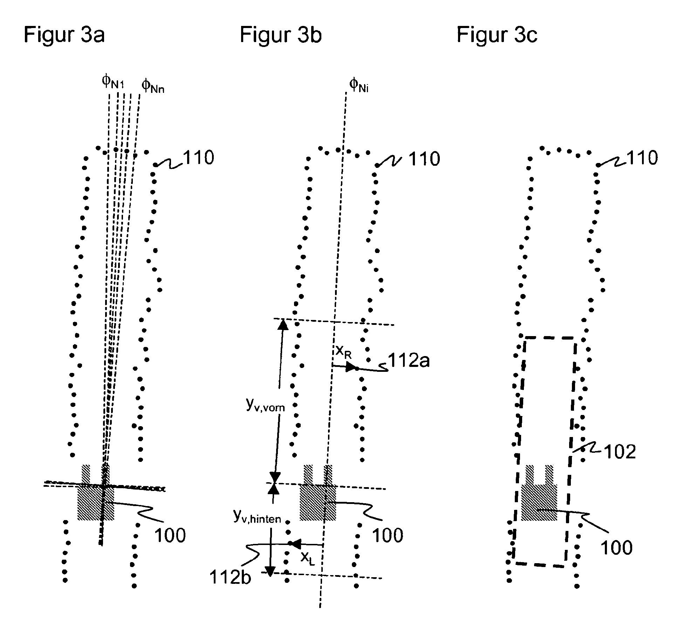

Die Figuren 2 und 3 illustrieren ein bevorzugtes zweischrittiges Verfahren zum Auffinden geeigneter Werte für φ und Δx. In einem ersten anhand der Figur 2 zu erläuternden Schritt wird bei Einfahrt des Schmalgangstaplers 100 in den Schmalgang 104 einmalig eine als Hauptdrehwinkel φ_{H} bezeichnete generelle Verdrehung und eine als Hauptversatz Δx_{H} bezeichnete generelle seitliche Verschiebung zur Mittelachse des Schmalgangs 104 bestimmt. In einem zweiten in Figur 3 dargestellten Schritt, der sich während der Durchfahrt durch den Schmalgang 104 regelmäßig wiederholt, werden dynamisch kleinere Verdrehungen um den Hauptdrehwinkel φ_{H} durch einen Nachstelldrehwinkel φ_{N} und ein kleinerer zusätzlicher Versatz gegenüber dem Hauptversatz Δx_{H} durch einen Nachstellversatz Δx_{N} ausgeglichen. Auf diese Weise werden die Schutz- und Warnfelder intelligent ausgewertet.

Unter Bezugnahme auf Figur 2 wird nun das Auffinden von Hauptdrehwinkel φ_{H} und Hauptversatz Δx_{H} erläutert. Die führt der Sensor 10 aus, wenn ihm die Steuerung des Schmalgangstaplers 100 die Einfahrt in einen Schmalgang 104 signalisiert. Zunächst erfasst der Sensor 10 mit einem Scan den Schmalgang 104 mit dessen Begrenzungspunkten 110. Diese Begrenzungspunkte 110 werden in ein globales Koordinatensystem transformiert, um einen gemeinsamen Bezug für die Zusammenarbeit mit weiteren Sensoren zu haben, beispielsweise einen weiteren Sensor 10, der den rückwärtigen Bereich überwacht.

In den Ursprung des Koordinatensystems werden wie in Figur 2a gezeigt Längsachsen mit verschiedenen Testdrehwinkeln φ_{H1}...φ_{Hn} gelegt, die beispielsweise gleichmäßig zwischen einer durch Konfiguration vorgegebenen minimalen und maximalen zu erwartenden Verdrehung variieren. Auch die zugehörigen senkrechten Querachsen sind eingezeichnet.

Für jeden Testdrehwinkel φ_{Hi} wird, wie in Figur 2b veranschaulicht, nach links und rechts der nächstgelegene Begrenzungspunkt 112a-b gesucht, indem der Abstand, also die Länge des Lots auf die Längsachse des Testdrehwinkels φ_{Hi}, aller Begrenzungspunkte 110 verglichen wird. Dabei unterteilt die Längsachse die Begrenzungspunkte 110 in einen linken und rechten Anteil. Es werden nur Begrenzungspunkte 110 einbezogen, die einen Höchstabstand y_{maX} zu dem Schmalgangstapler einhalten, wobei yₘₐₓ beispielsweise der vorkonfigurierten Längsausdehnung des gesuchten Schutzfeldes 102 bei Höchstgeschwindigkeit entspricht. Auch eine Beschränkung des Suchbereichs in Querrichtung ist möglich.

Der Hauptdrehwinkel φ_{H} ist derjenige Testdrehwinkel φ_{Hi}, unter dem die Summe der Abstände x_{L}+x_{R} der zu dem jeweiligen Testdrehwinkel φ_{Hi} gefundenen nächstgelegenen Begrenzungspunkte maximal wird. Unter diesem Hauptdrehwinkel φ_{H} lässt sich das breitestmögliche Schutzfeld 102 einpassen. Der Betrag der Summe x_{L}+x_{R} muss größer als die vorkonfigurierte Breite des Schutzfeldes 102 sein, ansonsten ist in der aktuellen Situation das geforderte Schutzfeld 102 nicht einpassbar, und es wird ein Nothalt ausgegeben. Nicht bei allen Testdrehwinkeln φ_{Hi} hält die Längsachse innerhalb der Ausdehnung des Schutzfeldes 102 überhaupt auf beiden Seiten einen endlichen Abstand zu der Begrenzung. Solche Testdrehwinkel φ_{Hi} kommen für den Hauptdrehwinkel φ_{H} unabhängig vom Wert der Summe X_{L}+x_{R} nicht in Betracht.

Figur 2c illustriert den aufgefundenen Hauptdrehwinkel φ_{H}. Nachdem die Orientierung somit bekannt ist, lässt sich auch der Hauptversatz Δx_{H} rasch berechnen, denn er muss so gewählt werden, dass für die versetzte Längsachse x_{R}=x_{L} gilt. Deshalb gilt Δx_{H}=1/2 (x_{L}+x_{R}). Damit sind die Ausgangswerte beider Parameter φ_{H}, Δx_{H} bei Einfahrt in den Schmalgang 104 ermittelt. Sicherheitshalber kann durch einen weiteren Scan geprüft werden, ob das so spezifizierte Schutzfeld 102 tatsächlich frei von unzulässigen Objekten ist und ob die Begrenzungspunkte 110 weiterhin an ihrem erwarteten Ort liegen.

Während der Durchfahrt werden, wie nun anhand von Figur 3 erklärt, differentielle Korrekturen der anfänglichen Parameter φ_{H}, Δx_{H} vorgenommen und dazu dynamisch ein Nachstelldrehwinkel φ_{N} und ein Nachstellversatz Δx_{N} bestimmt. Das Verfahren ist grundsätzlich das gleiche wie bei der Bestimmung von Hauptdrehwinkel φ_{H} und Hauptversatz Δx_{H}. Der Unterschied liegt in anderen Testdrehwinkeln φ_{Ni} und in unterschiedlichen in Betracht kommenden Begrenzungspunkten 110 (ROI, region of interest). Beispielsweise werden an die Begrenzungspunkte 112a, 112b statt des konstanten yₘₐₓ geschwindigkeitsabhängige Abstandsbedingungen y_{v,vom} und y_{v,hinten} gestellt.

Erneut werden, wie in Figur 3a gezeigt, eine Vielzahl von Längsachsen in Richtung von Testdrehwinkeln φ_{N1}..φ_{Nn} gezogen. Im Unterschied zu Figur 2a sind diese Längsachsen aber um Δx_{H} gegenüber der Mittelachse des Schmalgangstaplers 100 versetzt, und die Testdrehwinkel φ_{Ni} variieren in einem Testwinkelbereich um den Hauptdrehwinkel φ_{H}. Der Testwinkelbereich ist durch Konfiguration vorgegeben und kann identisch, aber auch deutlich enger sein als derjenige zum Auffinden des Hauptdrehwinkels φ_{H}, da jetzt durch den Hauptdrehwinkel φ_{H} schon ein guter Anfangswert vorliegt. Dieser kleinere Testwinkelbereich kann für eine schnellere Auswertung oder für eine höhere Auflösung in derselben Rechenzeit ausgenutzt werden.

Ganz analog zu Figur 2b wird dann, wie in Figur 3b gezeigt, jeder Nachstelldrehwinkel φ_{Ni} geprüft und der optimale Nachstelldrehwinkel φ_{N} anhand der maximalen Summe x_{R}+x_{L} der Abstände der nächstgelegenen Begrenzungspunkte 112a, 112b aufgefunden. In dem Beispiel ist der nächstgelegene linke Begrenzungspunkt 112a ein rückwärtiger Punkt. Das ist natürlich nur beispielhaft zu verstehen. Zudem setzt dies entweder einen weiteren Sensor 10 oder einen Sensor mit nahezu 360° Gesichtsfeld voraus. Möchte man nur in Fahrtrichtung absichern, so werden keine rückwärtigen Begrenzungspunkte 110 ermittelt und wären auch nicht relevant. Auch bei der Bestimmung des Hauptdrehwinkels treten keine rückwärtigen Begrenzungspunkte 110 auf, weil bei Eintritt in einen Schmalgang 104 üblicherweise rückwärtig zumindest über eine gewisse Distanz keine Begrenzung oder nur nicht zum Schmalgang 104 gehörige Begrenzungen nach rechts und links vorliegen.

Aus dem so aufgefundenen Nachstelldrehwinkel φ_{N} kann auch, wiederum als arithmetisches Mittel von x_{L} und x_{R}, der Nachstellversatz Δx_{N} berechnet werden, um das Schutzfeld 102 wie in Figur 3c gezeigt in Richtung des Nachstelldrehwinkels φ_{N} auszurichten und im Schmalgang 104 zu zentrieren. Die Berechnung des Nachstelldrehwinkels φ_{N} ist beispielsweise nützlich, wenn man die Lage der Schutzfelder 102 in dem Schmalgang 104 anzeigen möchte. Der Parameter Nachstelldrehwinkel φ_{N} ist aber eigentlich nur eine sprachliche Veranschaulichung, denn es genügt jetzt zu prüfen, ob die Summe X_{L}+x_{R} größer ist als die geforderte Breite des Schutzfeldes 102. Damit ist klar, dass ein Schutzfeld 102 der Mindestbreite einpassbar ist. Es ist für die Entscheidung über einen Nothalt nicht mehr erforderlich, dieses Schutzfeld 102 auch tatsächlich noch einzupassen. Auch muss nicht immer wirklich das Optimum für den Nachstelldrehwinkel φ_{N} gefunden werden. Es genügt, wenn irgend ein Testdrehwinkel alle Anforderungen erfüllt, also ein freies Schutzfeld 102 einpassbar macht. Das Verfahren kann dann abgebrochen werden, es wird zu diesem Zeitpunkt kein Nothalt ausgelöst. Es ist unerheblich und rein kosmetisch, ob vielleicht ein anderes Schutzfeld 102 noch besser einpassbar gewesen wäre, da die Sicherheitsanforderungen bereits erfüllt sind.

Figur 4 zeigt eine schematische dreidimensionale Ansicht eines Schmalgangs 104 aus Sicht des Schmalgangstaplers 100. Wenn der Sensor 10 eine Scanebene auf Höhe der Paletten 108 hat, so werden je nach Lagerinhalt die Regalfüße 106 möglicherweise verdeckt. Die Situation ist damit nicht deterministisch in dem Sinne, dass der Sensor je nach Lagerinhalt unterschiedliche Begrenzungspunkte 110 findet. Um dies zu verhindern und die Auswertung so robuster zu machen, können Abstandshalter 114 an den Regalen eingeführt werden. Sie tragen vorzugsweise Reflektormarken 116 in Höhe der Scanebene, die mindestens aus der Entfernung einer maximal denkbaren Schutzfeldlänge von dem Sensor 10 sicher erkannt werden. Wenn die Regalfüße 106 die am weitesten in den Schmalgang 104 hineinragenden Teile sind und gesichert ist, dass die Paletten 108 nicht überstehen, kann auf die Abstandshalter 114 verzichtet werden. Die Erkennung wird aber auch dann für den Sensor erleichtert, wenn an den Regalfüßen 106 Reflektormarken 116 angebracht werden.

Wenn die Schutzfeldeinpassung in zwei Schritten erfolgt, so genügt es oft, nur am Eingang des Schmalgangs 104 Abstandshalter 114 beziehungsweise Begrenzungsmarken 116 anzubringen. Damit ermittelt der Sensor 10 zuverlässig den Hauptdrehwinkel φ_{H} und den Hauptversatz Ax_{H}. Auf Basis dieser beiden Größen gelingt die Schutzfeldeinpassung im Schmalgang auch ohne zusätzliche Abstandshalter 114 und Begrenzungsmarken 116 während der weiteren Durchfahrt.

Der Schmalgangstapler 100 bewegt sich zwangsgeführt durch den Schmalgang 104, beispielsweise anhand induktiver Führungsschienen. Alternativ können aber auch die Daten des Sensors 10 für eine freie automatische Navigation ausgenutzt werden. Diese Navigation wird durch eine deterministische Umgebung, wie sie Abstandshalter 114 und Begrenzungsmarken 116 schaffen, erheblich erleichtert. Ein Sonderfall der automatischen Navigation ist das Abbremsen am Ende eines Schmalgangs 104, der eine Sackgasse bildet. Diese wird als Warnfeldverletzung des eingepassten Schutzfelds 104 rechtzeitig erkannt und löst das rechtzeitige Abbremsen aus.

## Patentansprüche

1. Optoelektronischer Sensor (10), insbesondere Laserscanner, für ein Fahrzeug (100), das sich auf einer zu beiden Seiten begrenzten Fahrbahn (104) bewegt, der einen Lichtempfänger (24) zur Umwandlung von Empfangslicht (20) in elektrische Signale sowie eine Auswertungseinheit (30, 34) aufweist, die dafür ausgebildet ist, aus den elektrischen Signalen die Position von Objekten in einem Überwachungsbereich des Sensors (10) sowie Begrenzungen (110) der Fahrbahn (104) zu ermitteln, ein in Lage und/oder Ausdehnung dynamisch veränderliches Schutzfeld (102) in die Begrenzungen (110) einzupassen und zu erkennen, ob sich ein unzulässiges Objekt innerhalb des Schutzfeldes (102) befindet, wobei ein sicherer Ausgang (32) vorgesehen ist, über den von der Auswertungseinheit (30, 34) bei Erkennung eines chutzfeldeingriffs ein Halte- oder Bremssignal an das Fahrzeug (100) ausgegeben wird,
**dadurch gekennzeichnet,**
**dass** die Auswertungseinheit (30, 34) weiterhin dafür ausgebildet ist, das Halte- oder Bremssignal auszugeben, wenn kein Schutzfeld (102) mit durch Sicherheitsanforderungen definierten Mindestabmessungen durch Variation der beiden Parameter Drehwinkel (φ) und Versatz (Δₓ) des Schutzfeldes (102) gegenüber einer Mittelachse des Fahrzeugs (100) so dynamisch in die Begrenzungen (110) einpassbar ist, dass keine verletzenden Schutzfeldeingriffe vorliegen.

2. Sensor (10) nach Anspruch 1,
wobei das Schutzfeld (102) eine von der Geschwindigkeit des Fahrzeugs (100) abhängige Längsausdehnung annähernd in Fahrrichtung und eine vorgegebene, an Fahrzeug (100) und/oder Fahrbahn (104) angepasste Querausdehnung aufweist, insbesondere im Wesentlichen rechteckig ist.

3. Sensor (10) nach einem der vorhergehenden Ansprüche,
wobei die Auswertungseinheit (30, 34) dafür ausgebildet ist, zunächst bei Befahren eines Fahrbahnabschnitts (104) einen Hauptdrehwinkel (φ_{H}) und einen Hauptversatz (Δx_{H}) des Schutzfeldes (102) festzulegen und während der Weiterfahrt auf dem Fahrbahnabschnitt (104) einen differentiellen Nachstelldrehwinkel (φ_{N}) zu bestimmen.

4. Sensor (10) nach Anspruch 3,
wobei die Auswertungseinheit (30, 34) dafür ausgebildet ist, den Hauptdrehwinkel (φ_{H}) und/oder den Nachstelldrehwinkel (φ_{N}) als denjenigen Winkel zu bestimmen, unter dem die Summe (x_{L}+x_{R}) aus den beiden Abständen einer Längsachse des Schutzfeldes (102) gegenüber den Begrenzungen (110) zu beiden Seiten der Fahrbahn (104) maximiert ist.

5. Sensor (10) nach Anspruch 3 oder 4,
wobei die Auswertungseinheit (30, 34) dafür ausgebildet ist, den Hauptversatz (Δx_{H}) und/oder einen Nachstellversatz (Δx_{H}) so zu bestimmen, dass die zentrale Längsachse des Schutzfeldes (102) von den Begrenzungen (110) zu beiden Seiten der Fahrbahn (104) den gleichen Abstand hat.

6. Sensor (10) nach einem der Ansprüche 3 bis 5,
wobei die Auswertungseinheit (30, 34) dafür ausgebildet ist, den Hauptdrehwinkel (φ_{H}) in einer Umgebung des durch die Fahrtrichtung gegebenen Winkels mit einer ersten Genauigkeit und den Nachstelldrehwinkel (φ_{N}) in einer Umgebung des Hauptdrehwinkels (φ_{H}) mit einer zweiten Genauigkeit zu suchen.

7. Fahrzeug (100) mit einem Sensor (10) nach einem der vorhergehenden Ansprüche, wobei das Fahrzeug (100) ein fahrerloses Transportsystem, insbesondere ein Hochregalstapler, und die Fahrbahn (104) ein gerader Gang in einem Lager, insbesondere einem Hochregallager ist und/oder wobei Abstandshalteelemente (114) zur Begrenzung der Fahrbahn vorgesehen sind, insbesondere nur am Anfang der Fahrbahn.

8. Fahrzeug (100) nach Anspruch 7,
wobei ein erster Sensor (10) zur Schutzfeldüberwachung in Fahrtrichtung und ein zweiter Sensor (10) zur Schutzfeldüberwachung gegen die Fahrtrichtung vorgesehen ist.

9. Verfahren zur Überwachung der Umgebung eines Fahrzeugs (100), insbesondere eines fahrerlosen oder zwangsgeführten Transportsystems, das sich auf einer zu beiden Seiten begrenzten Fahrbahn (104) bewegt, insbesondere einem Gang in einem Hochregallager, wobei die Überwachung mit einem optoelektronischen Sensor (10) erfolgt, insbesondere einem Laserscanner, und wobei aus durch Umwandlung von Empfangslicht gewonnenen elektrischen Signalen die Position von Objekten in dem Überwachungsbereich und Begrenzungen (110) der Fahrbahn (104) ermittelt werden und erkannt wird, ob sich ein unzulässiges Objekt innerhalb eines in Lage und Ausdehnung dynamisch veränderlichen Schutzfeldes (102) befindet, das in die Begrenzungen (110) eingepasst wird, wobei bei Erkennung eines Schutzfeldeingriffs ein Halte- oder Bremssignal an das Fahrzeug (100) ausgegeben wird,
**dadurch gekennzeichnet,**
**dass** das Halte- oder Bremssignal ausgegeben wird, wenn kein Schutzfeld (102) mit durch Sicherheitsanforderungen definierten Mindestabmessungen durch Variieren der beiden Parameter Drehwinkel (φ) und Versatz (Δₓ) des Schutzfeldes (102) gegenüber einer Mittelachse des Fahrzeugs (100) so in die Begrenzungen (110) dynamisch einpassbar ist, dass keine verletzenden Schutzfeldeingriffe vorliegen.

10. Verfahren nach Anspruch 9,
wobei zunächst bei Befahren eines Fahrbahnabschnitts (104) ein Hauptdrehwinkel (φ_{H}) und ein Hauptversatz (Δx_{H}) des Schutzfeldes (102) festgelegt und während der Weiterfahrt auf dem Fahrbahnabschnitt (104) ein differentieller Nachstelldrehwinkel (φ_{N}) bestimmt wird.

11. Verfahren nach Anspruch 9 oder 10, wobei der Hauptdrehwinkel (φ_{H}) und/oder der Nachstelldrehwinkel (φ_{N}) als derjenige Winkel bestimmt wird, unter dem die Summe aus den beiden Abständen (x_{L}+x_{R}) einer Längsachse des Schutzfeldes (102) gegenüber den Begrenzungen (110) zu beiden Seiten der Fahrbahn (104) maximiert ist, und/oder wobei der Hauptversatz (Δx_{H}) und/oder ein Nachstellversatz (Δx_{N}) so bestimmt wird, dass die zentrale Längsachse des Schutzfeldes (102) von den Begrenzungen (110) zu beiden Seiten der Fahrbahn (104) den gleichen Abstand hat.

## Claims

1. An optoelectronic sensor (10), in particular a laser scanner, for a vehicle (100) which moves on a path (104) bordered at both sides, the optoelectronic sensor (10) comprising a light receiver (24) for the conversion of received light (20) into electric signals as well as an evaluation unit (30, 34) which is configured to determine the position of objects in a monitored area of the sensor (10) as well as borders (110) of the path (104) from the electric signals, to fit a protected field (102) that is dynamically adaptable in position and/or extent into the borders (110) and to recognize whether an unauthorized object is located within the protected field (102), wherein a safety output (32) is provided via which a stop signal or a brake signal is output to the vehicle (100) by the evaluation unit (30, 34) on the recognition of a protected field intrusion,
**characterized in that**
the evaluation unit (30, 34) is furthermore configured to output the stop signal or brake signal when no protected field (102) of minimal dimensions defined by safety requirements can be dynamically fitted into the borders (110) by varying the two parameters angle of rotation (φ) and offset (Δₓ) of the protected field (102) with respect to a center axis of the vehicle (100) in such a way that there are no violating protected field intrusions.

2. A sensor (10) in accordance with claim 1,
wherein the protected field (102) has a longitudinal extent dependent on the speed of the vehicle (100) in approximately the direction of travel and a preset transverse extent matched to the vehicle (100) and/or the path (104), in particular is substantially rectangular.

3. A sensor (10) in accordance with any of the preceding claims,
wherein the evaluation unit (30, 34) is configured first to fix a main angle of rotation (φ_{H}) and a main offset (Δx_{H}) of the protected field (102) upon running on a path section (104) and to determine a differential readjustment angle of rotation (φ_{N}) during the continued travel on the path section (104).

4. A sensor (10) in accordance with claim 3,
wherein the evaluation unit (30, 34) is configured to determine the main angle of rotation (φ_{H}) and/or the readjustment angle of rotation (φ_{N}) as that angle at which the sum (x_{L} + x_{R}) of the two distances of a longitudinal axis of the protected field (102) is maximized with respect to the borders (110) at both sides of the path (104).

5. A sensor (10) in accordance with claim 3 or 4,
wherein the evaluation unit (30, 34) is configured to determine the main offset (Δx_{H}) and/or a readjustment offset (Δx_{H}) so that the central longitudinal axis of the protected field (102) has the same distance from the borders (110) at both sides of the path (104).

6. A sensor (10) in accordance with any of claims 3 to 5,
wherein the evaluation unit (30, 34) is configured to look for the main angle of rotation (φ_{H}) in an environment of the angle given by the direction of travel with a first precision and the readjustment angle (φ_{N}) in an environment of the main angle of rotation (φ_{H}) with a second precision.

7. A vehicle (100) having an optoelectronic sensor (10) in accordance with any of the preceding claims, wherein the vehicle (100) is a driverless transport system, in particular a high rack service truck, and the path (104) is a straight corridor in a storage facility, in particular in a high rack storage facility, and/or wherein spacer elements (114) are provided to border the path, in particular only at the start of the path.

8. A vehicle (100) in accordance with claim 7,
wherein a first sensor (10) is provided for protected field monitoring in the direction of travel and a second sensor (10) is provided for protected field monitoring against the direction of travel.

9. A method for monitoring the environment of a vehicle (100), in particular of a driverless or a positively driven transport system, which moves on a path (104) bordered at both sides, in particular a corridor in a high rack storage facility, wherein the monitoring takes place using an optoelectronic sensor (10), in particular a laser scanner, and wherein the position of objects in the monitored area and borders (110) of the path (104) are determined from electric signals acquired by conversion of received light and it is recognized whether an unauthorized object is located within a protected field (102) dynamically adaptable in position and extent that is fitted into the borders (110), with a stop signal or brake signal being output to the vehicle (100) on recognition of a protected field intrusion,
**characterized in that**
the stop signal or break signal is output when no protected field (102) of minimal dimensions defined by safety requirements can be dynamically fitted into the borders (110) by varying the two parameters angle of rotation (φ) and offset (Δₓ) of the protected field (102) with respect to a center axis of the vehicle (100) in such a way that there are no violating protected field intrusions

10. A method in accordance with claim 9,
wherein a main angle of rotation (φ_{H}) and a main offset (Δx_{H}) of the protected field (120) is first fixed upon the running on a path section (104) and a differential readjustment angle (φ_{N}) is determined during the continued travel on the path section (104).

11. A method in accordance with claim 9 or 10,
wherein the main angle of rotation (φ_{H}) and/or the readjustment angle of rotation (φ_{N}) is determined as that angle at which the sum of the two distances (x_{L} + x_{R}) of a longitudinal axis of the protected field (102) is maximized with respect to the borders (110) at both sides of the path (104), and/or wherein the main offset (Δx_{H}) and/or a readjustment offset (Δx_{N}) is determined so that the central longitudinal axis of the protected field (102) has the same distance from the borders (110) at both sides of the path (104).

## Revendications

1. Capteur opto-électronique (10), en particulier un scanner laser, pour un véhicule (100) qui circule sur une voie (104) bordée des deux côtés, le capteur opto-électronique (10) comprend un récepteur de lumière (24) pour la conversion de la lumière reçue (20) en signaux électriques ainsi qu'une unité d'évaluation (30, 34) qui est configurée pour déterminer la position des objets dans une zone surveillée du capteur (10) ainsi que pour déterminer des bords (110) de la voie (104) par les signaux électriques, pour adapter une zone de protection (102) qui est dynamiquement adaptables au position et/ou au expansion dans les bords (110) et pour reconnaître si un objet non-autorisé se situe dans la zone de protection (102), et une sortie sécurisée (32) est fournie sur laquelle un signal d'arrêt ou de freinage est émis au véhicule (100) par l'unité d'évaluation (30, 34) en reconnaissant une intrusion dans la zone de protection,
**caractérisé en ce que**
l'unité d'évaluation (30, 34) est en outre configurée pour émettre le signal d'arrêt ou de freinage lorsque aucune zone de protection (102) qui a des dimensions minimales définies par des demandes de sécurité est dynamiquement adaptable dans les bords (110) par variation les deux paramètres d'angle de rotation (Φ) et d'offset (Δx) de la zone de protection (102) par rapport à un axe central du véhicule (100), de telle manière qu'il n'y a pas d'intrusions vulnérantes dans la zone de protection.

2. Capteur (10) selon la revendication 1, **caractérisé en ce que** la zone de protection (102) comprend une expansion longitudinale et approximative en direction de circulation qui dépend de la vitesse du véhicule (100) et une expansion prédéfinie transversale adaptée au véhicule (100) et/ou la voie (104), et la zone de protection est en particulier essentiellement rectangulaire.

3. Capteur (10) selon l'une des revendications précédentes, **caractérisé en ce que** l'unité d'évaluation (30, 34) est configurée pour fixer d'abord un angle de rotation principal (Φ_{H}) et un offset principal (Δx_{H}) de la zone de protection (102) en circulant sur une section de voie (104) et pour déterminer un angle de rotation différentiel et réajustable (Φ_{N}) pendant la continuation de la circulation sur la section de voie (104).

4. Capteur (10) selon la revendication 3, **caractérisé en ce que** l'unité d'évaluation (30, 34) est configurée pour déterminer l'angle de rotation principal (Φ_{H}) et/ou l'angle de rotation différentiel et réajustable (Φ_{N}) comme l'angle sur lequel la somme (x_{L}+x_{R}) des deux distances d'un axe longitudinal de la zone de protection (102) aux bords (110) des deux côtés de la voie (104) est maximalisée.

5. Capteur (10) selon la revendication 3 ou 4, **caractérisé en ce que** l'unité d'évaluation (30, 34) est configurée pour déterminer l'offset principal (Δx_{H}) et/ou un offset réajustable (Δx_{H}) ainsi que l'axe longitudinal central de la zone de protection (102) a la même distance aux bords (110) des deux côtés de la voie (104).

6. Capteur (10) selon l'une des revendications 3 à 5, **caractérisé en ce que** l'unité d'évaluation (30, 34) est configurée pour chercher l'angle de rotation principal (Φ_{H}) avec une première précision dans un environnement de l'angle qui est défini par la direction de la circulation et pour chercher l'angle de rotation réajustable (Φ_{N}) avec une deuxième précision dans un environnement de l'angle de rotation principal (Φ_{H}).

7. Véhicule (100) avec un capteur (10) selon l'une des revendications précédentes, **caractérisé en ce que** le véhicule (100) est un système de transport sans conducteur, en particulier un gerbeur de stockage à hauts rayonnages, et la voie (104) est un couloir droit dans une installation de stockage, en particulier dans une installation de stockage à hauts rayonnages et/ou **en ce que** des éléments de distance (114) sont fournis pour limiter la voie, en particulier seulement au début de la voie.

8. Véhicule (100) selon la revendication 7, **caractérisé en ce que** un premier capteur (10) est prévu pour la surveillance de la zone de protection dans la direction de la circulation et un deuxième capteur (10) est prévu pour la surveillance de la zone de protection contre la direction de la circulation.

9. Procédé de surveillance de l'environnement d'un véhicule (100), en particulier d'un système de transport sans conducteur ou avec guide coercitif, qui circule sur une voie (104) bordée des deux côtés, en particulier un couloir dans une installation de stockage à hauts rayonnages, et la surveillance s'effectue à l'aide d'un capteur opto-électronique (10), en particulier d'un scanner laser, et la position des objets dans la zone surveillée et les bords (110) de la voie (104) sont déterminés par des signaux électriques qui sont obtenus par conversion de la lumière reçue, et il est reconnu si un objet non-autorisé est situé dans une zone de protection (102) dynamiquement adaptables au position et au expansion qui est adaptée dans les bords (110), et un signal d'arrêt ou un signal de freinage est émis au véhicule (100) en reconnaissant une intrusion dans la zone de protection,
**caractérisé en ce que**
le signal d'arrêt ou le signal de freinage est émis quand aucune zone de protection (102) qui a des dimensions minimales définies par des demandes de sécurité est dynamiquement adaptable dans les bords (110) par variation des deux paramètres d'angle de rotation (Φ) et d'offset (Δx) de la zone de protection (102) par rapport à un axe central du véhicule (100), de telle manière qu'il n'y a pas d'intrusions vulnérantes dans la zone de protection.

10. Procédé selon la revendication 9, **caractérisé en ce que** premièrement un angle de rotation principal (Φ_{H}) et un offset principal (Δx_{H}) de la zone de protection (102) sont fixés en circulant sur une section de voie (104) et un angle de rotation différentiel et réajustable (Φ_{N}) est fixé pendant la continuation de la circulation sur la section de voie (104).

11. Procédé selon la revendication 9 ou 10, **caractérisé en ce que** l'angle de rotation principal (Φ_{H}) et/ou l'angle de rotation différentiel et ajustable (Φ_{N}) est déterminé comme l'angle sur lequel la somme (x_{L}+x_{R}) des deux distances d'un axe longitudinal de la zone de protection (102) aux bords (110) des deux côtés de la voie (104) est maximalisée et/ou l'offset principal (Ax_{H}) et/ou un offset réajustable (Δx_{H}) est déterminé ainsi que l'axe longitudinal central de la zone de protection (102) a la même distance aux bords (110) des deux côtés de la voie (104).
